# EUROPEAN PATENT APPLICATION

(11) **EP 4 645 003 A1**
(43) Date of publication of application: **05.11.2025**
(21) Application number: 23910194.2
(22) Date of filing: 14.12.2023
(51) Int. Cl.: G05B 9/03

(54) **INDUSTRIAL ROBOT SAFETY CONTROL SYSTEM, CIRCUIT AND METHOD**

(30) Priority: 28.12.2022 CN 202211693627
(71) Applicant: Guangdong Midea Electric Co., Ltd., Foshan, Guangdong 528311 (CN); KUKA Robotics Guangdong Co., Ltd., Foshan, Guangdong 528311 (CN); Kuka Robotics Manufacturing China Co., Ltd., Xiaokunshan Town Shanghai 201616 (CN); Midea Group Co., Ltd., Foshan, Guangdong 528311 (CN)
(72) Inventor: DING, Chengrun, Foshan, Guangdong 528311 (CN); LI, Lerong, Foshan, Guangdong 528311 (CN); LIU, Dan, Foshan, Guangdong 528311 (CN); WEN, Yuanming, Foshan, Guangdong 528311 (CN); ZHU, Lei, Foshan, Guangdong 528311 (CN)
(74) Representative: Oelke, Jochen
(86) International application number: PCT/CN2023/138918
(87) International publication number: WO 2024/140264

(57) **Abstract**

A safety control system, a safety control circuit, and a safety control method for an industrial robot are provided. The safety control circuit includes: a control circuit, configured to generate a first test signal and a second test signal, wherein a test pulse of the first test signal does not overlap with a test pulse of the second test signal; a first interface circuit and a second interface circuit, connected to the control circuit. The first interface circuit and the second interface circuit respectively transmit the first test signal to the first signal transmission channel and transmit the second test signal to the second signal transmission channel; transmit a first feedback signal fed back from the first signal transmission channel to the control circuit and transmit a second feedback signal fed back from the second signal transmission channel to the control circuit. The control circuit determines, based on the first feedback signal and the second feedback signal, whether the first interface circuit and the first signal transmission channel are abnormal, and whether the second interface circuit and the second signal transmission channel are abnormal; and control the industrial robot to execute a safety strategy in response to abnormality occurring. In this way, safety control of the industrial robot is achieved.

## Description

### TECHNICAL FIELD

The present disclosure relates to the field of safety control of industrial robots, and in particular to a safety control system, a safety control circuit, and a safety control method of an industrial robot.

### BACKGROUND

As industrial automation develops, industrial robots are increasingly widely used. While improving an operation efficiency, safety function technology of the industrial robots has become a top priority in research and development. Usually, a safety architecture proposed by safety standards for collaborative robots needs to be met. In particular, an industrial robot is connected to an external safety-input device, such as an emergency stop button, a safety gate, an enabling switch, and a reset button. It needs to be determined whether connection between the external safety-input device and the industrial robot is safe. In the related art, an input signal of the external safety-input device is diagnosed by simple logic comparison. A single reference signal is used for diagnosis, which may not comprehensively detect likelihood of occurrence of a malfunction.

### SUMMARY OF THE DISCLOSURE

The present disclosure provides a safety control system, a safety control circuit, and a safety control method of an industrial robot to perform safety control on the industrial robot.

In a first aspect, the present disclosure provides a safety control circuit of an industrial robot, including:
a control circuit, configured to generate a first test signal and a second test signal, wherein a test pulse of the first test signal does not overlap with a test pulse of the second test signal;
a first interface circuit, connected to the control circuit and configured to: connect to a first signal transmission channel of a safety-input device of the industrial robot; transmit the first test signal to the first signal transmission channel; and transmit a first feedback signal fed back from the first signal transmission channel to the control circuit;
a second interface circuit, connected to the control circuit and configured to: connect to a second signal transmission channel of the safety-input device; transmit the second test signal to the second signal transmission channel; and transmit a second feedback signal fed back from the second signal transmission channel to the control circuit; and
wherein the control circuit is further configured to: determine, based on the first feedback signal and the second feedback signal, whether the first interface circuit and the first signal transmission channel are abnormal, and whether the second interface circuit and the second signal transmission channel are abnormal; and control the industrial robot to execute a safety strategy in response to abnormality occurring.

In a second aspect, the present disclosure provides a safety control system of an industrial robot, including:
a safety-input device, configured to obtain a danger trigger signal;
a servo controller, connected to the industrial robot to control the industrial robot;
a master controller, connected to the servo controller to control the servo controller; and
a safety controller, connected to the safety-input device and the servo controller and configured to generate an abnormal signal based on the danger trigger signal, wherein the servo controller is configured to execute a safety strategy based on the abnormal signal;
wherein the safety controller is the safety controller as described in the above.

In a third aspect, the present disclosure provides a safety control method of an industrial robot, performed by the safety controller as described in the above. The safety control method includes:
generating a first test signal and a second test signal;
receiving a first feedback signal, which is transmitted in the first signal transmission channel and fed back for the first test signal, and a second feedback signal, which is transmitted in the second signal transmission channel and fed back for the second test signal;
determining, based on the first feedback signal and the second feedback signal, whether the first interface circuit and the first signal transmission channel are abnormal and whether the second interface circuit and the second signal transmission channel are abnormal; controlling the industrial robot to execute a safety strategy in response to abnormality occurring.

According to the above, the first interface circuit is arranged to connect with the first signal transmission channel of the safety-input device of the industrial robot; and the second interface circuit is arranged to connect with the second signal transmission channel of the safety-input device of the industrial robot, such that the control circuit outputs the first test signal through the first interface circuit and obtains the first feedback signal through the first signal transmission channel; and the control circuit outputs the second test signal through the second interface circuit and obtains the second feedback signal through the second signal transmission channel. The control circuit determines, based on the first feedback signal and the second feedback signal, whether the first interface circuit and the first signal transmission channel are abnormal and whether the second interface circuit and the second signal transmission channel are abnormal. When the circuit and the transmission channel are determined as being abnormal, the control circuit controls the industrial robot to perform a safety strategy to satisfy the functional safety standard of the industrial robot. The functional safety standard of the industrial robot includes, but is not limited to, safety requirements set forth in the mechanical safety standard ISO 13849-1 and the international safety standard ISO 10218. The control circuit may effectively determine whether the connection between the safety-input device and the industrial robot is safe, and the safe control of the industrial robot can be achieved. In addition, the test pulse of the first test signal output by the control circuit does not overlap with the test pulse of the second test signal output by the control circuit. Therefore, when the control circuit performs comparison and determines the abnormality based on the first feedback signal of the first test signal and the second feedback signal of the second test signal, the control circuit may comprehensively detect safety of the two safety channels and accurately and quickly determine causes of the abnormality.

It is to be understood that the above general description and the following detailed description are exemplary and explanatory only and are not intended to limit the present disclosure.

### BRIEF DESCRIPTION OF THE DRAWINGS

The accompanying drawings herein are incorporated into and form a part of the specification. The accompanying drawings illustrate embodiments consistent with the present disclosure and are used in combination with the specification to illustrate the technical solutions of the present disclosure.
FIG. 1 is a structural schematic view of a safety control circuit of an industrial robot according to a first embodiment of the present disclosure.
FIG. 2 is a structural schematic view of a safety control circuit of an industrial robot according to a second embodiment of the present disclosure.
FIG. 3 is a structural schematic view of a safety control circuit of an industrial robot according to a third embodiment of the present disclosure.
FIG. 4 is a structural schematic view of a safety control system of an industrial robot according to a first embodiment of the present disclosure.
FIG. 5 is a structural schematic view of a safety control system of an industrial robot according to a second embodiment of the present disclosure.
FIG. 6 is a structural schematic view of a safety control system of an industrial robot according to a third embodiment of the present disclosure.

### DETAILED DESCRIPTION

Technical solutions in the embodiments of the present disclosure will be clearly and completely described below by referring to the accompanying drawings in the embodiments of the present disclosure. It is to be understood that specific embodiments described herein are for the purpose of explaining the present disclosure only, and do not limit the present disclosure. It is also to be noted that, for the purpose of description, only a portion structure, instead of all structure, related to the present disclosure is shown in the accompanying drawings. All other embodiments, which are obtained by any ordinary skilled person in the art based on the embodiments in the present disclosure without creative work, shall fall within the scope of the present disclosure.

Furthermore, the terms "first" or "second" used in this specification, which refer to a number or a sequential number, are used for descriptive purposes only and shall not be interpreted as expressly or impliedly indicating relative importance or implicitly specifying the number of the indicated technical features. Thus, a feature defined with "first" or "second" may expressly or impliedly include at least one such feature. In the present description, "plurality" means at least two, such as two, three or more, unless otherwise expressly and specifically limited.

The industrial robot is required to satisfy the safety requirements set forth in the mechanical safety standard ISO 13849-1 and the international safety standard ISO 10218. The present disclosure provides a safety control circuit of an industrial robot. The safety control circuit can satisfy the functional safety standard of the industrial robot. The functional safety standard of the industrial robot includes, but is not limited to, the safety requirements set forth in the mechanical safety standard ISO 13849-1 and the international safety standard ISO 10218. The safety control circuit can effectively determine whether the connection between the safety-input device and the industrial robot is safe and perform safety control on the industrial robot. In addition, the control circuit may comprehensively detect safety of the two safety channels and accurately and quickly determine causes of the abnormality.

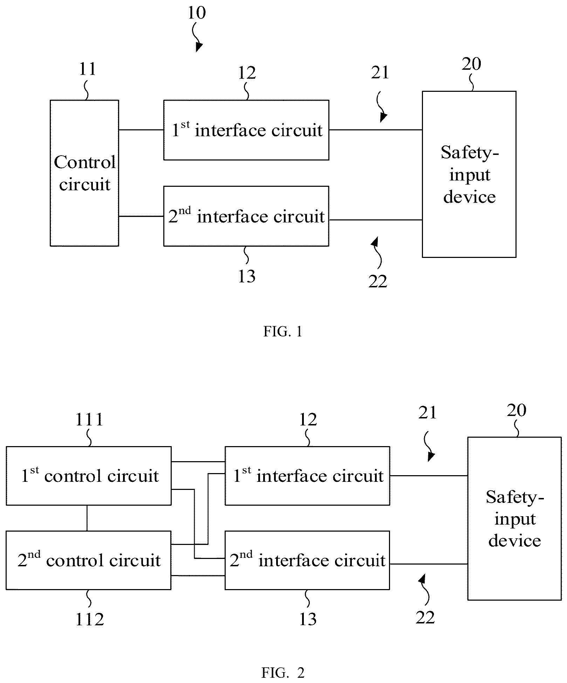

FIG. 1 is a structural schematic view of a safety control circuit of an industrial robot according to a first embodiment of the present disclosure. As shown in FIG. 1, the safety control circuit 10 includes a control circuit 11, a first interface circuit 12, and a second interface circuit 13. Specifically, the control circuit 11 is configured to generate a first test signal and a second test signal. A test pulse of the first test signal does not overlap with a test pulse of the second test signal. Specifically, when the first test signal is at a high voltage level, the second test signal is always at a low voltage level. When the second test signal is at a high voltage level, the first test signal is always at a low voltage level. That is, the first test signal and the second test signal cannot be both at the high voltage level at the same time. In the present embodiment, a voltage amplitude of the first test signal is equal to a voltage amplitude of the second test signal, and a period of the first test signal is the same as a period of the second test signal.

Specifically, the first interface circuit 12 is connected to the control circuit 11 and is further connected to a first signal transmission channel 21 of a safety-input device 20 of the industrial robot to transmit the first test signal to the first signal transmission channel 21 and to obtain a first feedback signal generated based on the first test signal. The first interface circuit 12 further transmits the first feedback signal from the first signal transmission channel 21 to the control circuit 11. The first feedback signal is generated by the safety-input device 20 based on the first test signal.

The second interface circuit 13 is connected to the control circuit 11 and is further connected to a second signal transmission channel 22 of the safety-input device 20 to transmit the second test signal to the second signal transmission channel 22 and to obtain a second feedback signal generated based on the second test signal. The second interface circuit 13 further transmits the second feedback signal from the second signal transmission channel 22 to the control circuit 11. The second feedback signal is generated by the safety-input device 20 based on the second test signal.

The control circuit 11 further determines, based on the first feedback signal transmitted by the first transmission channel 21, whether the first interface circuit 12 and the first signal transmission channel 21 are abnormal; and determines, based on the second feedback signal transmitted by the second transmission channel 22, whether the second interface circuit 13 and the second signal transmission channel 22 are abnormal. When the control circuit 11 determines that at least one of the first interface circuit 12, the first signal transmission channel 21, the second interface circuit 13, and the second signal transmission channel 22 is abnormal, the control circuit 11 controls the industrial robot to perform a safety strategy, such that safety control is achieved. When either one or both of the first signal transmission channel and the second signal transmission channel is abnormal, the control circuit 11 controls the industrial robot to perform a corresponding safety strategy, which may be a control-stop operation or a torque-shutdown operation, and so on.

In the present embodiment, the control circuit 11 compares the first feedback signal and the second feedback signal to achieve redundant detection, and the functional safety standard of the industrial robot is met. The functional safety standard of the industrial robot includes, but is not limited to, the safety requirements set forth in the mechanical safety standard ISO 13849-1 and the international safety standard ISO 10218. It is effectively determined whether the connection between the safety-input device 20 and the industrial robot is safe, and the safety control of the industrial robot is achieved. In addition, the test pulse of the first test signal output by the control circuit 11 do not overlap with the test pulse of the second test signal output by the control circuit 11. In this way, when the control circuit 11 performs comparison and determines the abnormality based on the first feedback signal of the first test signal and the second feedback signal of the second test signal, the control circuit 11 may comprehensively detect safety of two safety channels and accurately and quickly determine causes of the abnormality. One of the two safety channels is formed by the first interface circuit 12, the first signal transmission channel 21, and the safety-input device 20. The other one of the two safety channels is formed by the second interface circuit 13, the second signal transmission channel 22, and the safety-input device 20.

Combining FIG. 1 and FIG. 2, FIG. 2 is a structural schematic view of a safety control circuit of an industrial robot according to a second embodiment of the present disclosure. As shown in FIG. 2, the control circuit 11 is arranged with a first control circuit 111 and a second control circuit 112.

Specifically, the first control circuit 111 is connected to the first interface circuit 12 and the second interface circuit 13. The first control circuit 111 is configured to: generate the first test signal; determine, based on the received first feedback signal, whether or not either one or both of the first interface circuit 12 and the first signal transmission channel 21 are abnormal; and determine, based on the second feedback signal, whether or not either one or both of the second interface circuit 13 and the second signal transmission channel 22 are abnormal. The first control circuit 111 further generates a first test result based on abnormality of the first interface circuit 12, the second interface circuit 13, and the second signal transmission channel 22.

The second control circuit 112 is connected to the first interface circuit 12 and the second interface circuit 13. The second control circuit 112 is configured to: generate the second test signal; determine, based on the first feedback signal, whether or not either one or both of the first interface circuit 12 and the first signal transmission channel 21 are abnormal; and determine, based on the second feedback signal, whether or not either one or both of the second interface circuit 13 and the second signal transmission channel 22 are abnormal. The second control circuit 112 further generates a second test result based on abnormality of the first interface circuit 12, the second interface circuit 13, and the second signal transmission channel 22.

The first control circuit 111 is further connected to the second control circuit 112 to enable the first control circuit 111 to obtain the second test result generated by the second control circuit 112 or to enable the second control circuit 112 to obtain the first test result generated by the first control circuit 111. The first control circuit 111 and/or the second control circuit 112 further cross-validate the first test result with the second test result to determine whether or not the control circuit 11 itself is abnormal.

In the present embodiment, the first control circuit 111 and the second control circuit 112 are redundantly arranged in the control circuit 11. The first control circuit 111 and the second control circuit 112 perform dual redundant detection to improve detection accuracy and to detect a connection state between the safety-input device 20 and the industrial robot more accurately. That is, a safety state of the safety channel that connects the safety-input device 20 with the industrial robot is determined. The industrial robot configured with the safety control circuit 10 of the present embodiment is enabled to meet the functional safety standard. Meeting the functional safety standard of the industrial robot includes, but is not limited to, meeting the safety requirements set forth in the mechanical safety standard ISO 13849-1 and the international safety standard ISO 10218. Specifically, the safety function of the industrial robot configured with the safety control circuit 10 is enabled to meet requirements set forth in Category 3 and Performance Level d.

In the present embodiment, each of the first control circuit 111 and the second control circuit 112 may be a micro controller unit (MCU). A dual-MCU architecture in the present embodiment is configured to detect the safe connection between the safety-input device 20 and the industrial robot to accurately receive a safety-input signal sent from the safety-input device 20, and furthermore, the dual-MCU architecture is configured to achieve safe communication, monitoring input from a motor encoder; a safe position detection, a safe speed detection, a collision detection, and so on.

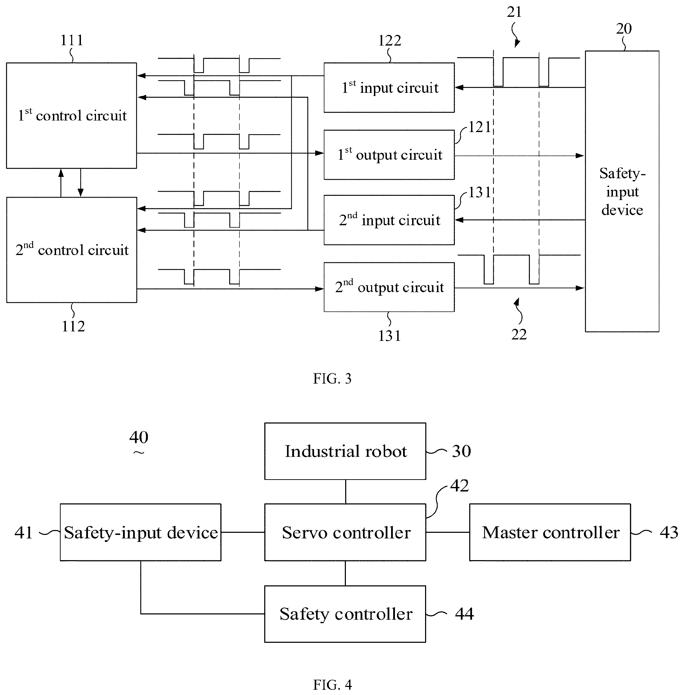

Combining FIG. 1, FIG. 2 with FIG. 3, FIG. 3 is a structural schematic view of a safety control circuit of an industrial robot according to a third embodiment of the present disclosure. As shown in FIG. 3, the first interface circuit 12 includes a first output circuit 121 and a first input circuit 122.

Specifically, the first output circuit 121 is connected to a first end of the first signal transmission channel 21 and the control circuit 11. The first input circuit 122 is connected to the control circuit 11 and a second end of the first signal transmission channel 21. Specifically, the first input circuit 122 is connected to the first control circuit 111 to transmit the first feedback signal to the first control circuit 111 and is connected to the second control circuit 112 to transmit the first feedback signal to the second control circuit 112.

In some embodiments, since each of an operating voltage of the first control circuit 111 and an operating voltage of the second control circuit 112 is 3.3 V and an operating voltage of the safety-input device 20 is 20 V, voltage transformation and/or isolation may be performed on the first control circuit 111, the second control circuit 112, and the safety-input device 20. In the present embodiment, a corresponding circuit is arranged in the first output circuit 121 and/or the first input circuit 122 to achieve the voltage transformation and/or isolation.

Specifically, in an embodiment, the first interface circuit 12 includes a first isolation circuit. The first isolation circuit is connected to the first signal transmission channel 21 of the safety-input device 20 and the control circuit 11. That is, the first isolation circuit is connected to the first control circuit 111, the second control circuit 112, and the first signal transmission channel 21 to achieve the voltage isolation between the control circuit 11 and the safety-input device 20. In some embodiments, the first isolation circuit may be integrated in the first control circuit 111 and the second control circuit 112, respectively.

In another embodiment, the first interface circuit 12 includes a first voltage-transformation circuit. The first voltage-transformation circuit is connected to the first signal transmission channel 21 of the safety-input device 20 and the control circuit 11. That is, the first voltage-transformation circuit is connected to the first control circuit 111, the second control circuit 112, and the first signal transmission channel 21 to achieve voltage transformation between the control circuit 11 and the safety-input device 20. In other embodiments, the first voltage-transformation circuit may be integrated in the first control circuit 111 and the second control circuit 112.

In another embodiment, the first interface circuit 12 includes a first optocoupler. The first optocoupler is connected the first signal transmission channel 21 of the safety-input device 20 and the control circuit 11. That is, the first optocoupler is connected to the first control circuit 111, the second control circuit 112, and the first signal transmission channel 21 to achieve voltage transformation and voltage isolation between the control circuit 11 and the safety-input device 20. In other embodiments, the first optocoupler may be integrated in the first control circuit 111 and the second control circuit 112.

In other embodiments, other devices or circuits having the voltage isolation and voltage transformation functions may be configured in the first interface circuit 12 and/or integrated in the first control circuit 111 and the second control circuit 112.

As shown in FIG. 3, the second interface circuit 13 includes a second output circuit 131 and a second input circuit 132. The second output circuit 131 is connected to the first end of the second signal transmission channel 22 and the control circuit 11. The second input circuit 132 is connected to the second end of the second signal transmission channel 22 and the control circuit 11. Specifically, the second input circuit 132 is connected to the first control circuit 111 and the second control circuit 112 to transmit the second feedback signal to the first control circuit 111 and the second control circuit 112, respectively.

In the present embodiment, a circuit corresponding to the first output circuit 121 and/or the first input circuit 122 is arranged in the second input circuit 132 to achieve the voltage transformation and/or voltage isolation. Specifically, the corresponding circuit may be arranged in the second input circuit 132 and/or the second output circuit 131.

Specifically, in an embodiment, the second interface circuit 13 includes a second isolation circuit. The second isolation circuit is connected to the second signal transmission channel 22 of the safety-input device 20 and the control circuit 11. That is, the second isolation circuit is connected to the first control circuit 111, the second control circuit 112, and the second signal transmission channel 22 to achieve voltage isolation between the control circuit 11 and the safety-input device 20. In some embodiments, the second isolation circuit may be integrated in the first control circuit 111 and the second control circuit 112.

In another embodiment, the second interface circuit 13 includes a second voltage-transformation circuit, the second voltage-transformation circuit is connected to the second signal transmission channel 22 of the safety-input device 20 and the control circuit 11. That is, the second voltage-transformation circuit is connected to the first control circuit 111, the second control circuit 112, and the second signal transmission channel 22 to achieve voltage transformation between the control circuit 11 and the safety-input device 20. In other embodiments, the second voltage-transformation circuit may be integrated in the first control circuit 111 and the second control circuit 112, respectively.

In another embodiment, the second interface circuit 13 includes a second optocoupler. The second optocoupler is connected to the second signal transmission channel 22 of the safety-input device 20 and the control circuit 11. That is, the second optocoupler is connected to the first control circuit 111, the second control circuit 112, and the second signal transmission channel 22 to achieve the voltage isolation and the voltage transformation between the control circuit 11 and the safety-input device 20. In other embodiments, the second optocoupler may be integrated in the first control circuit 111 and the second control circuit 112, respectively.

In other embodiments, other devices or circuits having voltage isolation and voltage transformation functions may be arranged in the second interface circuit 13 and/or integrated in the first control circuit 111 and the second control circuit 112.

In other embodiments, the circuit for achieving the voltage transformation and/or voltage isolation may be arranged in any one or combination of the various circuits. Specifically, the circuit for achieving the voltage transformation and/or voltage isolation may be arranged in the first output circuit 121 and the second input circuit 132, or in the first input circuit 122 and the second output circuit 131, or in the first output circuit 121, or in the first input circuit 122 and the second input circuit 132, or in the second input circuit 132 and the second output circuit 131, or in the first output circuit 121, or in the first input circuit 122, or in the second input circuit 132 and the second output circuit 131

As shown in FIG. 3, in the present embodiment, the test pulse of the first test signal output by the control circuit 11 does not overlap with the test pulse of the second test signal output by the control circuit 11. In this way, when the control circuit 11 performs comparison and determines abnormality based on the first feedback signal of the first test signal and the second feedback signal of the second test signal, safety conditions of two safety channels can be comprehensively detected, and causes for the occurrence of the abnormality can be determined accurately and quickly.

Specifically, the first control circuit 111 outputs the first test signal, the second control circuit 112 outputs the second test signal. There is a certain phase difference between the first test signal and the second test signal. In some embodiments, the test pulse of the second test signal and the test pulse of the first test signal may be adjacent to each other or spaced apart from each other. The first control circuit 111 and the second control circuit 112 of the present embodiment have a same operating voltage, that is, a voltage amplitude of the first test signal generated by the first control circuit 111 is equal to a voltage amplitude of the second test signal generated by the second control circuit 112. A period for generating the first test signal is equal to a period for generating the second test signal, and that is, in one clock cycle, the number of test pulses of the first test signal is equal to the number of test pulses of the second test signal.

Each of the first control circuit 111 and the second control circuit 112 fuses the first feedback signal fed back from the first signal transmission channel 21 with the second feedback signal fed back from the second signal transmission channel 22. It is determined, based on the fused signal, whether either one of both of the first signal transmission channel 21 and the second signal transmission channel 22 are abnormal. The first control circuit 111 and the second control circuit 112 may perform signal fusion by directly superimposing the first feedback signal with the second feedback signal. Alternatively, one of the first control circuit 111 and the second control circuit 112 is multiplied by a proportional coefficient to obtain a proportional feedback signal, and the proportional feedback signal is superimposed with the other one of the first control circuit 111 and the second control circuit 112 to achieve the signal fusion.

The control circuit 11 determines, based on the received first feedback signal, whether either one or both of the first interface circuit 12 and the first signal transmission channel 21 are abnormal; and determines, based on the second feedback signal, whether either one or both of the second interface circuit 13 and the second signal transmission channel 23 are abnormal. Specific detection results may be as follows.

Specifically, a first detection result is as follows. In response to the control circuit 11, i.e., the first control circuit 111 and/or the second control circuit 112, detecting that the first test signal is the same as the first feedback signal and that the second test signal is the same as the second feedback signal, it is determined that no abnormality occurs in the safety-input device 20, and state information of the safety-input device 20 is the two channels being closed. Specifically, after voltage transformation and voltage isolation are performed on the first feedback signal, in response to a voltage amplitude of the first feedback signal being the same as a voltage amplitude of the first test signal, the first feedback signal is the same as the first test signal, and the first feedback signal completely coincides with the first test signal. After voltage transformation and voltage isolation are performed on the second feedback signal, in response to a voltage amplitude of the second feedback signal being the same as a voltage amplitude of the second test signal, the second feedback signal is the same as the second test signal, and the second feedback signal completely coincides with the second test signal. In this case, the safety-input device 20 is normally connected to the industrial robot and normally inputs safety command signals, such as an emergency-stop signal, an enabling termination signal, and so on. When an operator normally triggers the safety-input device 20, the control circuit 11 detects a change in the input feedback signal in real time and operates a safety control method corresponding to the feedback signal.

For a second detection result, in response to the control circuit 11, i.e., the first control circuit 111 and/or the second control circuit 112, detecting that each of the first feedback signal and the second feedback signal is at a low voltage level signal, it is determined that no abnormality occurs in the safety-input device 20, and state information of the safety-input device 20 is the two channels being disconnected. The low voltage level signal may be a zero-level signal. In this case, the safety-input device 20 is disconnected from the industrial robot, and the safety command signal cannot be input to the industrial robot through the safety-input device 20.

For a third detection result, it is determined that the safety-input device 20 abnormal, and the state information of the safety-input device 20 is one channel corresponding to one of the signals being closed, in response to the control circuit 11, i.e., the first control circuit 111 and/or the second control circuit 112, detecting that one of the first feedback signal and the second feedback signal is constantly the low voltage level signal and the other is the same as the corresponding test signal, and that is, the voltage level signal of one of the first feedback signal and the second feedback signal is always lower than the highest voltage value, and the other one of the first feedback signal and the second feedback signal coincides with the corresponding test signal.

For a fourth detection result, in response to the control circuit 11, i.e., the first control circuit 111 and/or the second control circuit 112, detecting that one of the first feedback signal or the second feedback signal is always the low voltage level signal, that is, one of the first feedback signal or the second feedback signal is always the zero-level signal, it is determined that the safety-input device 20 is abnormal and the state information of the safety-input device 20 is that one channel corresponding to the low voltage level signal is shorted to the ground. An interval between the first signal transmission channel 21 and the second signal transmission channel 22 is relatively large. Therefore, when the control circuit 11 detects that one of the first feedback signal or the second feedback signal is always the low voltage level signal, i.e., when the signal transmission channel corresponding to the feedback signal is shorted to the ground, the control circuit 11 may immediately trigger safety control. Therefore, a situation where both signal transmission channels are detected as being shorted to the ground cannot occur, and the situation of both channels of the safety-input device 20 being disconnected can be distinguished. In this way, the cause of abnormality can be detected accurately.

For a fifth detection result, in response to the control circuit 11, i.e., the first control circuit 111 and/or the second control circuit 112, detecting that both the first feedback signal and the second feedback signal are high voltage level signals, i.e., each of the first feedback signal and the second feedback signal is a high voltage level signal higher than the lowest voltage value, it is determined that the first signal transmission channel 21 is short circuited with the first signal transmission channel 22 (cross-talk between the first signal transmission channel 21 and the second signal transmission channel 22). Due to rules of the first test signal and the second test signal, there must be one test signal at the high voltage level and the other one test signal at the low voltage level in one time period. In this case, when an end of the channel having the high voltage level is short-circuited with an end of the channel having the low voltage level, the circuit is designed to be a strong pull-up circuit. Therefore, the low voltage level may be pulled up to be the high voltage level. At a logic end of the circuit, i.e., the control circuit 11, two feedback signals both at the high voltage level may be detected.

For a sixth detection result, in response to the control circuit 11, i.e., the first control circuit 111 and/or the second control circuit 112, detecting that one of the first feedback signal and the second feedback signal is always a high voltage level signal, it is determined that the safety-input device 20 is abnormal and state information of the safety-input device 20 is one channel corresponding to the high voltage level signal being shorted to the high voltage level (stuck at High). Since an operating voltage of the safety-input device 20 is 20V, the high voltage level signal corresponding to one of the first feedback signal or the second feedback signal is 20 V. The interval between the first signal transmission channel 21 and the second signal transmission channel 22 is relatively large. Therefore, when the control circuit 11 detects that one of the first feedback signal or the second feedback signal is always the high voltage level signal, i.e., the signal transmission channel corresponding to the feedback signal is shorted to the high voltage level (stunted at High), the control circuit 11 immediately triggers the safety control. In this way, a situation where both signal transmission channels are detected to be shorted to the high voltage level may not occur, such that the situation that the two channels of the safety-input device 20 are short-circuited to each other may be distinguished, and therefore, the cause of the abnormality can be determined accurately.

In the present embodiment, the test pulse of the first test signal output from the first control circuit 111 does not overlap with the test pulse of the second test signal output from the second control circuit 112, such that dual-redundant output of proportional pulses are achieved. Further, dual-redundant input is achieved based on the first feedback signal generated from the first test signal and the second feedback signal generated from the second test signal, such that the cause of the abnormality in the connection between the safety-input device 20 and the industrial robot can be determined accurately and comprehensively based on states of the two feedback signals. In addition, the first control circuit 111 and the second control circuit 112 are redundantly arranged in the control circuit 11. The first detection result of the first control circuit 111 with the second detection result of the second control circuit 112 are cross-checked by the first control circuit 111 and the second control circuit 112 to determine whether the control circuit 11 is abnormal, such that dual redundant cross-checking is achieved. In this way, the industrial robot applied with the safety-control circuit 10 meets the functional safety standard of the industrial robot. The functional safety standard the industrial robot includes, but is not limited to, the safety requirements set forth in the mechanical safety standard ISO 13849-1 and the international safety standard ISO 10218.

The present disclosure further provides a safety control system of an industrial robot. FIG. 4 is a structural schematic view of the safety control system of the industrial robot according to a first embodiment of the present disclosure. As shown in FIG. 4, the safety control system 40 is connected to the industrial robot 30. The safety control system 40 includes a safety-input device 41, a servo controller 42, a master controller 43, and a safety controller 44. The safety-input device 41 is the safety-input device 20 as described in the above embodiment. The safety controller 44 is the safety controller 10 as described in the above embodiment, which will not be repeated herein.

In detail, the safety-input device 41 is configured to collect a danger trigger signal. The danger trigger signal may be generated by an operator touching the corresponding safety-input device 41. The servo controller 42 is connected to the industrial robot 30 to control the industrial robot 30 to specifically allow the industrial robot 30 to perform operational operations. The master controller 43 is connected to the servo controller 42 to control the servo controller 42 to perform operational operations and operations of safety control. The safety controller 44 is connected to the safety-input device 41 and the servo controller 42 to generate an abnormal signal based on the danger trigger signal. The servo controller 42 executes a safety strategy, such as an emergency stop or a torque shutdown, based on the abnormal signal.

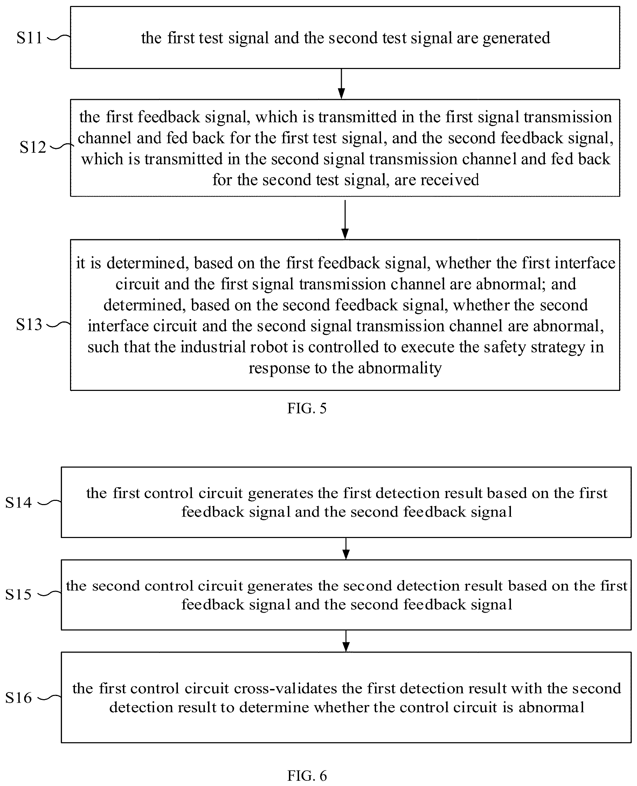

The present disclosure further provides a safety control method for the industrial robot. FIG. 5 is a flow chart of a safety control method for the industrial robot according to an embodiment of the present disclosure. An execution subject of the safety control method of the industrial robot of the present disclosure may be the safety controller 10 of the above embodiment.

Specifically, the safety control method of the industrial robot of the present embodiment may include the following operations.

In an operation S11, the first test signal and the second test signal are generated.

The first test signal is generated by the first control circuit 111, and the second test signal is generated by the second control circuit 112. The test pulse of the first test signal does not overlap with the test pulse of the second test signal. The voltage amplitude of the first test signal is equal to the voltage amplitude of the second test signal. The period of the first test signal is the same as the period of the second test signal.

Specifically, the control circuit 11 generates the first test signal through the first control circuit 111 and generates the second test signal through the second control circuit 112. In some embodiments, a time point of one test pulse of the first test signal may be the same as or different from a time point of one test pulse of the second test signal, and the test pulse of the first test signal is adjacent to the test pulse of the second test signal. That is, when the first test signal is converted from the high voltage level to the low voltage level, the second test signal is converted from the low voltage level to the high voltage level; or when the second test signal is converted from the high voltage level to the low voltage level, the first test signal is converted from the low voltage level to the high voltage level. In some embodiments, corresponding test pulses may be set according to actual needs, as long as the test pulses of the two test signals do not overlap to each other. In this way, when the first control circuit 111 and the second control circuit 112 perform signal fusion on the first test signal and the second test signal, the two test signals in the fused signal can be clearly distinguished from each other.

In an operation S12, the first feedback signal, which is transmitted in the first signal transmission channel and fed back for the first test signal, and the second feedback signal, which is transmitted in the second signal transmission channel and fed back for the second test signal, are received.

The first signal transmission channel 21 transmits the first test signal to the safety-input device 20. The safety-input device 20 generates the first feedback signal based on the first test signal. The first signal transmission channel 21 further transmits the first feedback signal to the control circuit 11. The second signal transmission channel 22 transmits the second test signal to the safety-input device 20. The safety-input device 20 generates the second feedback signal based on the second test signal. The second signal transmission channel 22 further transmits the second feedback signal to the control circuit 11.

Specifically, the control circuit 11 generates the first test signal through the first control circuit 111. The first test signal is further transmitted to the safety-input device 20 through the first signal transmission channel 21 and the first interface circuit 12 connected to the first control circuit 111. In addition, the control circuit 11 generates the second test signal through the second control circuit 112. The second test signal is further transmitted to the safety-input device 20 through the second interface circuit 13 and the second signal transmission channel 22 connected to the second control circuit 112.

The first signal transmission channel 21 also receives the first feedback signal generated by the safety-input device 20 to transmit the first feedback signal to the first control circuit 111 and the second control circuit 112 respectively via the first interface circuit 12. The second signal transmission channel 22 further receives the second feedback signal generated by the safety-input device 20 to transmit the second feedback signal to the first control circuit 111 and the second control circuit 112 respectively via the second interface circuit 13.

In an operation S13, it is determined, based on the first feedback signal, whether the first interface circuit and the first signal transmission channel are abnormal; and determined, based on the second feedback signal, whether the second interface circuit and the second signal transmission channel are abnormal, such that the industrial robot is controlled to execute the safety strategy in response to the abnormality.

The control circuit 11 determines, based on the first feedback signal, whether the first interface circuit 12 and the first signal transmission channel 21 are abnormal; and determines, based on the second feedback signal, whether the second interface circuit 13 and the second signal transmission channel 22 are abnormal. In this way, when the abnormality occurs, the control circuit 11 controls the industrial robot to execute the safety strategy, such as an emergency stop or torque shutdown.

Specifically, the first control circuit 111 determines, based on the received first feedback signal, whether the first interface circuit 12 and the first signal transmission channel 21 are abnormal; and determines, based on the received second feedback signal, whether the second interface circuit 13 and the second signal transmission channel 22 are abnormal. The first control circuit 111 further generates the first detection result based on abnormalities in the first interface circuit 12, the second interface circuit 13, and the second signal transmission channel 22.

The second control circuit 112 determines, based on the received first feedback signal, whether the first interface circuit 12 and the first signal transmission channel 21 are abnormal; and determines, based on the received second feedback signal, whether the second interface circuit 13 and the second signal transmission channel 22 are abnormal. The second control circuit 112 further generates the second detection result based on abnormalities in the first interface circuit 12, the second interface circuit 13, and the second signal transmission channel 22.

The first control circuit 111 and/or the second control circuit 112 cross-verify the first detection result and the second detection result to determine whether the control circuit 11 itself is abnormal.

The control circuit 11 obtains, based on the first feedback signal and the second feedback signal, the detection result as follows.

Specifically, for the first detection result, in response to the control circuit 11 detecting that the first test signal is the same as the first feedback signal and that the second test signal is the same as the second feedback signal, it is determined that no abnormality occurs in the safety-input device 20 and state information of the safety-input device 20 is the two channels being closed. Specifically, after voltage transformation and voltage isolation are performed on the first feedback signal, in response to a voltage amplitude of the first feedback signal being the same as a voltage amplitude of the first test signal, the first feedback signal is the same as the first test signal, and the first feedback signal completely coincides with the first test signal. After voltage transformation and voltage isolation are performed on the second feedback signal, in response to a voltage amplitude of the second feedback signal being the same as a voltage amplitude of the second test signal, the second feedback signal is the same as the second test signal, and the second feedback signal completely coincides with the second test signal. In this case, the safety-input device 20 is in a normal operating state. When the operator normally triggers the safety-input device 20, the control circuit 11 detects a change in the input feedback signal in real time and executes the corresponding safety control method based on the feedback signal.

For the second detection result, in response to the control circuit 11 detecting that each of the first feedback signal and the second feedback signal is the low voltage level signal, it is determined that no abnormality occurs in the safety-input device 20, and state information of the safety-input device 20 is the two channels being disconnected. In this case, the safety-input device 20 is in a disconnected state, i.e., the safety-input device 20 does not feed back for the test signal. When the operator triggers the safety-input device 20, the feedback signal is not affected.

For the third detection result, in response to the control circuit 11 detecting that one of the first feedback signal and the second feedback signal is the low voltage level signal and the other is the same as the corresponding test signal, it is determined that the safety-input device 20 abnormal and the state information of the safety-input device 20 is one channel corresponding to one of the signals being closed. In this case, the safety-input device 20 has been connected to the industrial robot, however, one of the first signal transmission channel 21 and the second signal transmission channel 22 is closed abnormally, resulting in the control circuit 11 being unable to receive the feedback signal that is transmitted through the first signal transmission channel 21 or the second signal transmission channel 22. Therefore, a corresponding safety control method needs to be performed, a component that is erroneous or abnormal needs to be adjusted or replaced.

For the fourth detection result, in response to the control circuit 11 detecting that one of the first feedback signal or the second feedback signal is the low voltage level signal, it is determined that the safety-input device 20 is abnormal, and the state information of the safety-input device 20 is that one channel corresponding to the low voltage level signal is shorted to the ground. In this case, the safety-input device 20 is connected to the industrial robot, however, one of the first signal transmission channel 21 and the second signal transmission channel 22 is shorted to the ground, resulting in the feedback signal, which is transmitted through this signal transmission channel to the control circuit 11, being always at the low voltage level. Therefore, the corresponding safety control method needs to be performed, the circuit that is abnormally grounded needs to be found and adjusted or replaced.

For the fifth detection result, in response to the control circuit 11 detecting that one of the first feedback signal and the second feedback signal is the high voltage level signal, it is determined that the safety-input device 20 is abnormal, and the state information of the safety-input device 20 is that one channel corresponding to the high voltage level signal is shorted to the high voltage level. In this case, the safety-input device 20 is connected to the industrial robot, however, one of the first signal transmission channel 21 and the second signal transmission channel 22 is shorted to the high voltage level, resulting in the feedback signal, which is transmitted through this signal transmission channel to the control circuit 11, being always at the high voltage level. Therefore, the corresponding safety control method needs to be performed, the circuit that is abnormally short-circuited needs to be found and adjusted or replaced.

For the sixth detection result, in response to the control circuit 11 detecting that both the first feedback signal and the second feedback signal are high voltage level signals, it is determined that the first signal transmission channel 21 is short circuited with the first signal transmission channel 22. In this case, the safety-input device 20 is connected to the industrial robot, however, the first signal transmission channel 21 is short-circuited to the second signal transmission channel 22, resulting in the feedback signal received by the control circuit 11 being always at the high voltage level. Therefore, the corresponding safety control method needs to be performed, a circuit located in the abnormally short-circuited region needs to be found and adjusted or replaced.

Further, the safety control method of the industrial robot of the present embodiment may further include operation as shown in FIG. 6. FIG. 6 is a flow chart of the safety control method of the industrial robot according to another embodiment of the present disclosure. Specifically, the safety control method of the industrial robot of the present embodiment includes the following operations.

In an operation S14, the first control circuit generates the first detection result based on the first feedback signal and the second feedback signal.

The control circuit 11 includes a first control circuit 111, and the first control circuit 111 generates the first detection result based on the first feedback signal and the second feedback signal.

In some embodiments, the first control circuit 111 may fuse the first feedback signal with the second feedback signal in advance; and compare the fused signal with a predetermined signal. When the first control circuit 111 determines that the fused signal is the same as the predetermined signal, a normal detection result is generated. When the first control circuit 111 determines that the fused signal is not the same as the predetermined signal, an abnormal detection result is generated.

In some embodiments, the first control circuit 111 may further obtain the second test signal generated by the second control circuit 112; compares the first feedback signal with the first test signal; and compares the second feedback signal with the second test signal. When the first control circuit 111 determines that the first feedback signal is the same as the first test signal and the second feedback signal is the same as the second test signal, a normal detection result is generated. When the first control circuit 111 determines that either the first feedback signal is not the same as the first test signal or the second feedback signal is not the same as the second test signal, an abnormal detection result is generated.

In an operation S15, the second control circuit generates the second detection result based on the first feedback signal and the second feedback signal.

The control circuit 11 includes the second control circuit 112, the second control circuit 112 generates the second detection result based on the first feedback signal and the second feedback signal.

In some embodiments, the second control circuit 112 may fuse the first feedback signal with the second feedback signal in advance; compare the fused signal with a predetermined signal. When the second control circuit 112 determines that the fused signal is the same as the predetermined signal, the normal detection result is generated. When the second control circuit 112 determines that the fused signal is not the same as the predetermined signal, the abnormal detection result is generated.

In some embodiments, the second control circuit 112 further obtains the first test signal generated by the first control circuit 111; compares the first feedback signal with the first test signal; and compares the second feedback signal with the second test signal. When the second control circuit 112 determines that the first feedback signal is the same as the first test signal, and the second feedback signal is the same as the second test signal, the normal detection result is generated. When the second control circuit 112 determines that either the first feedback signal is not the same as the first test signal or the second feedback signal is not the same as the second test signal, the abnormal detection result is generated.

In an operation S16, the first control circuit cross-validates the first detection result with the second detection result to determine whether the control circuit is abnormal.

The first control circuit 111 and the second control circuit 112 are connected to each other. In the present embodiment, the first control circuit 111 cross-validates the first detection result with the second detection result to determine whether the control circuit 10 is abnormal. In other embodiments, the second control circuit 112 cross-validates the first detection result with the second detection result to determine whether the control circuit 10 is abnormal. In other embodiments, each of the first control circuit 111 and the second control circuit 112 cross-validates the first detection result with the second detection result to determine whether the control circuit 10 is abnormal.

According to the safety control method of the industrial robot of the present embodiment, the first control circuit 111 generates the first test signal, and the second control circuit 113 generates the second test signal. The first control circuit 111 obtains the first feedback signal of the first test signal through the first signal input channel 21, and the second control circuit 113 obtains the second feedback signal of the second test signal through the second signal input channel 22. In this way, the control circuit 11 determines, based on the first feedback signal and the second feedback signal, whether the first interface circuit 12 and the first signal transmission channel 21 are abnormal, such that the industrial robot is controlled to execute the safety strategy when the channels are abnormal, and the functional safety standard of the industrial robot is met. The functional safety standard of the industrial robot includes, but is not limited to, the safety requirements set forth in the mechanical safety standard ISO 13849-1 and the international safety standard ISO 10218. It is effectively determined whether the connection between the safety-input device and the industrial robot is safe, the safety control of the industrial robot can be achieved. In addition, the test pulse of the first test signal output by the control circuit 11 does not overlap with the test pulse of the second test signal output by the control circuit 11. In this way, when the control circuit determines, by performing comparison based on the first feedback signal of the first test signal and the second feedback signal of the second test signal, abnormal situations, safety conditions of the two channels can be comprehensively detected, and causes for the occurrence of the abnormal situations can be determined accurately and quickly. Moreover, in addition to generating the respective test signals, the first control circuit 111 and the second control circuit 112 further generate the first detection result and the second detection result based on the first feedback signal and the second feedback signal respectively. The first detection result and the second detection result are cross-validated, such that redundant detection is achieved, accuracy of the detection is improved, the functional safety standard of the industrial robot can be met. The functional safety standard of the industrial robot includes, but is not limited to, the safety requirements set forth in the mechanical safety standard ISO 13849-1 and the international safety standard ISO 10218.

. The above shows only implementation of the present disclosure, but does not limit the scope of the present disclosure. Any equivalent structure or equivalent process transformation performed based on the contents of the specification and the accompanying drawings of the present disclosure, applied directly or indirectly in other related technical fields, shall be included in the scope of the present disclosure.

## Claims

1. A safety control circuit (10) of an industrial robot, **characterized by** comprising:
a test circuit (11), configured to generate a first test signal and a second test signal, wherein a test pulse of the first test signal does not overlap with a test pulse of the second test signal;
a first interface circuit (12), configured to be connected to the test circuit (11) and configured to: connect to a first signal transmission channel (21) of a safety-input device (20) of the industrial robot; transmit the first test signal to the first signal transmission channel (21); and transmit a first feedback signal fed back from the first signal transmission channel (21) to the test circuit (11);
a second interface circuit (13), configured to be connected to the test circuit (11) and configured to: connect to a second signal transmission channel (22) of the safety-input device (20); transmit the second test signal to the second signal transmission channel (22); and transmit a second feedback signal fed back from the second signal transmission channel (22) to the test circuit (11); and
wherein the test circuit (11) is further configured to: determine, based on the first feedback signal and the second feedback signal, whether the first interface circuit (12) and the first signal transmission channel (21) are abnormal, and whether the second interface circuit (13) and the second signal transmission channel (22) are abnormal; and control the industrial robot to execute a safety strategy in response to abnormality occurring.

2. The safety control circuit (10) according to claim 1, wherein the test circuit (11) comprises:
a first control circuit (111), configured to be connected to the first interface circuit (12) and the second interface circuit (13) wherein the first control circuit (111) is configured to: generate the first test signal; determine, based on the first feedback signal and the second feedback signal, whether the first interface circuit (12) and the first signal transmission channel (21) are abnormal and whether the second interface circuit (13) and the second signal transmission channel (22) are abnormal; and generate a first detection result;
a second control circuit (112), configured to be connected to the first interface circuit (12) and the second interface circuit (13), wherein the second control circuit (112) is configured to: generate the second test signal; determine, based on the first feedback signal and the second feedback signal, whether the first interface circuit (12) and the first signal transmission channel (21) are abnormal and whether the second interface circuit (13) and the second signal transmission channel (22) are abnormal; and generate a second detection result;
wherein the first control circuit (111) is configured to be connected to the second control circuit (112) to cross-validate the first detection result with the second detection result to determine whether the test circuit (11) is abnormal.

3. The safety control circuit (10) according to claim 1, wherein,
the first interface circuit (12) comprises: a first output circuit (121), configured to be connected to the test circuit (11) and a first end of the first signal transmission channel (21); and a first input circuit (122), configured to be connected to a second end of the first signal transmission channel (21) and the test circuit (11); and
the second interface circuit (13) comprises: a second output circuit (131), configured to be connected to the test circuit (11) and a first end of the second signal transmission channel (22); and a second input circuit (132), configured to be connected to a second end of the second signal transmission channel (22) and the test circuit (11).

4. The safety control circuit (10) according to claim 1, wherein,
the first interface circuit (12) comprises: a first isolation circuit, configured to be connected to the test circuit (11) and the first signal transmission channel (21) of the safety-input device (20) to realize voltage isolation between a voltage of the test circuit (11) and a voltage of the safety-input device (20); and
the second interface circuit (13) comprises: a second isolation circuit, configured to be connected to the test circuit (11) and the second signal transmission channel (22) of the safety-input device (20) to realize voltage isolation between the voltage of the test circuit (11) and the voltage of the safety-input device (20).

5. The safety control circuit (10) according to claim 3, wherein,
the first interface circuit (12) comprises: a first voltage-transformation circuit, configured to be connected to the test circuit (11) and the first signal transmission channel (21) of the safety-input device (20) to realize voltage transformation between a voltage of the test circuit (11) and a voltage of the safety-input device (20); and
the second interface circuit (13) comprises: a second voltage-transformation circuit, configured to be connected to the test circuit (11) and the second signal transmission channel (22) of the safety-input device (20) to realize voltage transformation between the voltage of the test circuit (11) and the voltage of the safety-input device (20).

6. The safety control circuit (10) according to claim 3, wherein,
the first output circuit (121) comprises: a first optocoupler, configured to be connected to the test circuit (11) and the first signal transmission channel (21) of the safety-input device (20) to realize voltage isolation and voltage transformation between a voltage of the test circuit (11) and a voltage of the safety-input device (20); and
the second output circuit (131) comprises: a second optocoupler, configured to be connected to the test circuit (11) and the second signal transmission channel (22) of the safety-input device (20) to realize voltage isolation and voltage transformation between the voltage of the test circuit (11) and the voltage of the safety-input device (20).

7. The safety control circuit (10) according to claim 1, wherein, in response to the test circuit (11) detecting that the first test signal is the same as the first feedback signal and that the second test signal is the same as the second feedback signal, the test circuit (11) is configured to determine that no abnormality occurs in the safety-input device (20) and that state information of the safety-input device (20) is the two signal transmission channels being closed; and
in response to the test circuit (11) detecting that the first feedback signal and the second feedback signal are both low level signals, the test circuit (11) is configured to determine that no abnormality occurs in the safety-input device (20) and that the state information of the safety-input device (20) is the two signal transmission channels being disconnected.

8. The safety control circuit (10) according to claim 1, wherein, in response to the test circuit (11) detecting that one of the first feedback signal and the second feedback signal is a low level signal and the other one of the first feedback signal and the second feedback signal is the same as the corresponding one of the first test signal and the second test signal, the test circuit (11) is configured to determine that the safety-input device (20) is abnormal and state information of the safety-input device (20) is that one of the first signal transmission channel and the second signal transmission channel corresponding to the low level signal is closed.

9. The safety control circuit (10) according to claim 1, wherein, in response to the test circuit (11) detecting that one of the first feedback signal and the second feedback signal is a low level signal, the test circuit (11) is configured to determine that the safety-input device (20) is abnormal and state information of the safety-input device (20) is that one of the first signal transmission channel and the second signal transmission channel corresponding to the low level signal is short-circuited to the ground.

10. The safety control circuit (10) according to claim 1, wherein, in response to the test circuit (11) detecting that one of the first feedback signal and the second feedback signal is a high level signal, the test circuit (11) is configured to determine that the safety-input device (20) is abnormal and state information of the safety-input device (20) is that one of the first signal transmission channel and the second signal transmission channel corresponding to the high level signal is short-circuited to a high level.

11. The safety control circuit (10) according to claim 1, wherein, in response to the test circuit (11) detecting that both the first feedback signal and the second feedback signal are high level signals, the test circuit (11) is configured to determine that the first signal transmission channel (21) is short-circuited to the second signal transmission channel (22).

12. A safety control system (40) of an industrial robot, **characterized by** comprising:
a safety-input device (41), configured to obtain a danger trigger signal;
a servo controller (42), configured to be connected to the industrial robot to control the industrial robot;
a master controller (43), configured to be connected to the servo controller (42) to control the servo controller (42); and
a safety controller (44), configured to be connected to the safety-input device (20) and the servo controller (42) and configured to generate an abnormal signal based on the danger trigger signal, wherein the servo controller (42) is configured to execute corresponding sub-safety strategies based on the abnormal signal; wherein the safety strategy comprises a plurality of sub-safety strategies;
wherein the safety controller (44) is the safety control circuit (10) according to any one of claims 1 to 11.

13. A safety control method of an industrial robot, **characterized by** being performed by the safety control circuit (10) according to any one of claims 1 to 11, wherein the safety control method comprises:
generating a first test signal and a second test signal (S11);
receiving a first feedback signal, which is transmitted in the first signal transmission channel (21) and fed back for the first test signal, and a second feedback signal, which is transmitted in the second signal transmission channel (22) and fed back for the second test signal (S12);
determining, based on the first feedback signal and the second feedback signal, whether the first interface circuit (12) and the first signal transmission channel (21) are abnormal and whether the second interface circuit (13) and the second signal transmission channel (22) are abnormal in order to control the industrial robot to execute a safety strategy in response to abnormality occurring (S13).

14. The safety control method according to claim 13, wherein the determining, based on the first feedback signal and the second feedback signal, whether the first interface circuit (12) and the first signal transmission channel (21) are abnormal and whether the second interface circuit (13) and the second signal transmission channel (22) are abnormal, comprises:
in response to the first test signal being the same as the first feedback signal and the second test signal being the same as the second feedback signal, determining that no abnormality occurs in the safety-input device (20) and state information of the safety-input device (20) is the two signal transmission channels being closed; and
in response to the first feedback signal and the second feedback signal both being low level signals, determining that no abnormality occurs in the safety-input device (20) and that the state information of the safety-input device (20) is the two signal transmission channels being disconnected.

15. The safety control method according to claim 13, wherein the determining, based on the first feedback signal and the second feedback signal, whether the first interface circuit (12) and the first signal transmission channel (21) are abnormal and whether the second interface circuit (13) and the second signal transmission channel (22) are abnormal, comprises:
in response to one of the first feedback signal and the second feedback signal being a low level signal and the other one of the first feedback signal and the second feedback signal being the same as the corresponding one of the first test signal and the second test signal, determining that the safety-input device (20) is abnormal and state information of the safety-input device (20) is that one of the first signal transmission channel and the second signal transmission channel corresponding to the low level signal is closed.

16. The safety control method according to claim 13, wherein the determining, based on the first feedback signal and the second feedback signal, whether the first interface circuit (12) and the first signal transmission channel (21) are abnormal and whether the second interface circuit (13) and the second signal transmission channel (22) are abnormal, comprises:
in response to one of the first feedback signal and the second feedback signal being a low level signal, determining that the safety-input device (20) is abnormal and state information of the safety-input device (20) is that one of the first signal transmission channel and the second signal transmission channel corresponding to the low level signal is short-circuited to the ground.

17. The safety control method according to claim 13, wherein the determining, based on the first feedback signal and the second feedback signal, whether the first interface circuit (12) and the first signal transmission channel (21) are abnormal and whether the second interface circuit (13) and the second signal transmission channel (22) are abnormal, comprises:
in response to one of the first feedback signal and the second feedback signal being a high level signal, determining that the safety-input device (20) is abnormal and state information of the safety-input device (20) is that one of the first signal transmission channel and the second signal transmission channel corresponding to the high level signal is short-circuited to a high level.

18. The safety control method according to claim 13, wherein the determining, based on the first feedback signal and the second feedback signal, whether the first interface circuit (12) and the first signal transmission channel (21) are abnormal and whether the second interface circuit (13) and the second signal transmission channel (22) are abnormal, comprises:
in response to detecting that both the first feedback signal and the second feedback signal are high level signals, determining that the first signal transmission channel (21) is short-circuited to the second signal transmission channel (22).

19. The safety control method according to claim 13, wherein the test circuit (11) comprises a first control circuit (111) and a second control circuit (112), and the safety control method further comprises:
generating, by the first control circuit (111) based on the first feedback signal and the second feedback signal, a first detection result;
generating, by the second control circuit (112) based on the first feedback signal and the second feedback signal, a second detection result;
cross-validating, by the first control circuit (111), the first detection result with the second detection result to determine whether the test circuit (11) is abnormal.
